Europäisches Patentamt

European Patent Office

Office européen des brevets

(19)

(11) Publication number: **0 168 213**
**A2**

(12) **EUROPEAN PATENT APPLICATION**

(21) Application number: **85304748.8**

(22) Date of filing: **03.07.85**

(51) Int. Cl.⁴: **A 61 G 7/04**
**A 47 C 27/10**

(30) Priority: **10.07.84 GB 8417611**

(43) Date of publication of application:
**15.01.86 Bulletin 86/3**

(84) Designated Contracting States:
**AT BE CH DE FR GB IT LI LU NL SE**

(71) Applicant: **TALLEY MEDICAL EQUIPMENT LTD.**
**47 Theobald Street**
**Borehamwood Herts, WD6 4RT(GB)**

(72) Inventor: **Evans, Ronald James Peter**
**11 Florida Close**
**Bushey Heath Hertfordshire(GB)**

(74) Representative: **Sommerville, John Henry et al,**
**SOMMERVILLE & RUSHTON 11 Holywell Hill**
**St. Albans Hertfordshire, AL1 1EZ(GB)**

(54) Control systems for air pads or mattresses.

(57) The operation of an air pad or mattress of the kind having one or more sets of air cells (A,B) that are selectively inflatable and deflatable to change from time to time areas of the pad or mattress providing support to a person's body is controlled by a system (10,11,12) including an air pump (14), a series of valves (18 to 21) operable by a control unit (30) to inflate and deflate selectively the cells, and a pressure sensor (25) for sensing air pressures within the cells, information derived therefrom dependent on body weight and weight distribution being used by the control unit to determine operating air pressure values to which selected ones of the cels or sets of cells are to be inflated.

Thus the system serves to adjust automatically air pressure within the cells according to current individual requirements.

Sets of cells may be inflated alternately. Where the pad or mattress is provided with a single set of cells, the cells may be inflated sequentially, either in groups or individually.

./...

Croydon Printing Company Ltd.

FIG.1

CONTROL SYSTEMS FOR AIR PADS OR MATTRESSES

This invention relates to control systems for air pads or mattresses and their methods of operation.

The invention is concerned particularly with control systems for air pads or mattresses of the alternating pressure kind manufactured by Applicants under the Registered Trade mark "Ripple", especially, but not exclusively, for bed or chair-bound patients, as used for example for the prevention of pressure sores and other conditions resulting from restricted circulation when the patient is capable of only limited movement. One such kind of pad or mattress comprises essentially a number of sets of collapsible air cells which together provide a surface for supporting the patient, the arrangement being such that from time to time some of the cells are inflated and others are deflated, with the result that the patient is supported by pressure exerted at different areas of the body at different times, and no one area of the body remains permanently under pressure.

In one known constructional form, for example as described in the Applicants' British Patent Specification No. 1286197, the pad or mattress has two sets of cells comprising generally cylindrical flexible plastics tubes extending transversely of the pad or mattress with alternate tubes connected together and constituting a respective set of cells. Each set of alternate tubes are inter-connected at their one end through a respective header tube extending lengthwise of the pad or mattress, the header tubes for the respective set of cells being disposed along opposite sides of the pad or mattress. Air is supplied to and exhausted from each header tube by means of a pump and valve arrangement in such a manner that one set of cells is inflated whilst the other is deflated and vice-versa. This inflation and deflation of each set of cells alternates in a cyclical fashion so that the portions of the pad or mattress providing support to the patient are constantly alternating. At any given time therefore, the patient is supported by the inflated tubes of one set of cells whereas the parts of the patient's body overlying the deflated and collapsed tubes of the other set of cells are not subjected to any significant pressure. Before the pressure of the one set of cells acting on those parts of the patient's body supported thereby can cause any harm as a result of, for example, the constriction of capillaries in the skin at those parts, the one set of cells is deflated and the other inflated so as to transfer support of the patient to other parts of the body.

In another known constructional form of this kind of pad or mattress, two sheets of plastic material are secured, for example welded, at selected areas, so as to define therebetween two sets of cells, each set comprising a number of transversely extending arrays of interconnected diamond-shape segments with one array of each set being connected with the next array of that set by a U-shape tube defined between the two sheets at a respective edge of the pad or mattress. The two sets of cells are, as with the previous arrangement, interdigitated such that an array of one set lies adjacent to an array of the other set with the respective diamond-shape segments of each adjacent pair of arrays intermeshing with one another. As before, a pump and valve arrangement repetitively inflates and deflates alternatively the two sets of cells, and may be arranged to pump air into one set of cells whilst venting the other set to atmosphere or, alternatively, to transfer air from one set of cells to the other.

The invention is applicable also to mattresses or pads of the so-called sequentially-operated kind, for example as described in British Patent Specification No. 1499938. Such a pad or mattress comprises an assembly of flexible-walled cells disposed side by side so as to be contactable by an area of the body for supporting the body, and a valve arrangement for ensuring in a first group of the cells a fluid pressure greater than atmospheric and in one or more second cells a lesser fluid pressure, the cells constituting the first group and the second cell or cells being changed periodically, and the ratio of the number of cells of the first group to the number of the second cell or cells being always greater than unity.

By way of example, the mattress or pad may have a plurality of elongated cells arranged parallel in a row, only a single one of such cells, or an adjacent group, or a dispersed group, being made non-supporting at any given moment. For instance, the cells may all be connected to a

-4- 0168213

source of pressure air by a cyclical valve which allows each cell to become deflated in turn whilst keeping the others inflated, the deflated cell "moving" sequentially or non-sequentially in the row, e.g. from head to foot or from side to side of a support bed or the like. Again, the selection of cells for deflation may be entirely at random, i.e. in an irregular pattern.

It has been customary with all such kinds of air pads or mattresses to provide a pressure regulator in association with the pump and valve arrangement whereby the air pressure supplied to the set of cells can be appropriately adjusted to meet the individual requirements, for example size and weight, of the patient concerned. In this way, it is possible to adjust the pressure of air in the pad or mattress so that optimum comfort of the patient is approached without the pad or mattress feeling unduly hard for example. The adjustment of air pressure would normally be the responsiblity of a nurse using guideline settings provided by the mattress manufacturers in conjunction with medical advice. The dependency on a nurse in this respect is not always satisfactory.

It is also intended with this kind of pad or mattress that the pressure be adjusted also to take account of any changes in the patient's bodily position. Although the pressure adjustment may be set initially at a value providing satisfactory comfort for the patient in a supine position, the patient may subsequently change position by sitting up or rolling onto one side. In these circumstances it will be appreciated that the effective body supporting areas are altered with the patient's body weight being concentrated through less body surface area. The resulting increase in body pressure on smaller areas of the pad or mattress may be such as to force air from those areas of the pad or mattress intended to support the body with the result that the patient's body may then actually be supported by the surface, for example a bed, on which the pad or mattress is disposed. Obviously this negates the advantage of using an air pad or mattress

The problem could be obviated by suitably increasing the pressure of the pad or mattress to accommodate accordingly the change in patient weight distribution. It is not always possible, or convenient, for a nurse to monitor a patient regularly and effect any necessary pressure adjustment. In the intervening time before such adjustment can be made, harm may be caused to the patient. Also, it is not easy for a nurse to assess the amount of pressure adjustment necessary in view of the individual size and weight characteristics of patients so that any adjustment which may be effected might not prove adequate.

It is an object of the present invention to provide a method and control system for operating an air pad or mattress of the aforementioned kind which is capable of adjusting automatically the pressure of air supplied to the pad or mattress in accordance with the individual size, weight and bodily position of the patient.

According to one aspect of the present invention there is provided a method of controlling operation of an air pad or mattress of the kind having one or more sets of air cells which, in use, are selectively inflatable and deflatable so as to change from time to time the portions of the pad or mattress providing support to a body thereon, the one or more sets of cells being connected to a source of pressurised air through valve means operable by control means to inflate and deflate selectively the cells, comprising the steps of sensing by pressure sensing means connected with the control means operational air pressure characteristics of the cells and deriving information dependent upon a body's weight and disposition acting on the cells, selecting an operating air pressure value in accordance therewith, and thereafter controlling the valve means so as to inflate selected ones of the cells or sets of cells of the pad or mattress to around the selected operating air pressure value.

In the case where a number of sets of cells is provided, said sets are preferably inflated alternately. On the other hand, where a single set of cells is provided, the cells of that set may be inflated sequentially, either individually or in groups.

Thus, the method serves to adjust automatically the value of the air pressure within the cells of the one or more sets of cells of the pad or mattress in accordance with individual patient body weight and posture requirements and eliminates the difficulties associated with arrangements known heretofore where pressure adjustment is effected manually.

In the case of a pad or mattress having two sets of cells, each selectively inflatable and deflatable, the selected air pressure value may be selected by the control means, which may comprise a microprocessor operable under the control of a stored program, by inflating the sets of cells to a predetermined air pressure value, venting one set of cells until a preselected sensing pressure value is reached, venting the other set of cells until the air pressure in the one set of cells begins to rise as a result of body weight acting thereon, measuring the air pressure in the other set of cells at this point, performing a first calculation within the control means using this measurement to derive a first pressure value, inflating the one set of cells and deflating the other until they reach said first pressure value and said sensing pressure value respectively, inflating the one set of cells until the pressure in the other set of cells begins to decrease, measuring the pressure in the one set of cells at this point, performing a second calculation using this second, measured pressure value within the one set of cells and the said first pressure value to derive the selected operating air pressure value.

Following derivation of the selected operating air pressure value, the control means may operate the valve means so as to inflate and deflate alternately the sets of cells to around respectively the selected operating air pressure value and a lower air pressure value, which may be the preselected sensing pressure value.

The step of deriving a selected operating air pressure value is preferably repeated by the control means after a period of time, and advantageously at intervals, for example following a predetermined number of inflation/deflation cycles of the sets of cells. In this way, any change or changes in bodily position of the patient on the pad or mattress, and thus weight distribution, which may occur from time to time are catered for automatically by the system with a fresh selected operating air pressure value being suitably derived to meet requirements existing at the time or times of derivation.

According to another aspect of the present invention, there is provided a control system for an air pad or mattress of the kind having one or more sets of air cells which in use are selectively inflatable and deflatable so as to change from time to time the portions of the pad or mattress supporting a body thereon, comprising a pump for delivering pressurised air, valve means operable through control means to control selectively the feeding of pressurised air from the pump to the cells and the exhausting of air therefrom in order to inflate and deflate respectively the cells, pressure sensing means connected with the control means for sensing air pressures within the cells, the control means being arranged to sense operational air pressure characteristics of the cells and derive information dependent upon a body's weight and disposition acting on the cells, and to select an operating air pressure value in accordance therewith, and thereafter to control the valve means in order to inflate selected ones of the cells or sets of cells to around the selected air pressure value.

A control system and its method of operation in accordance with the present invention will now be described, by way of example, with reference to the accompanying drawings in which:-

Figure 1 is a block schematic diagram of the control system; and

Figures 2 and 3 are simplified consecutive flow charts illustrating the operation of the control system.

As already mentioned, the control system is intended for use with supportive air pads or mattresses of the kind having, for example, two sets of interlaced air cells which are inflated and deflated sequentially such that the two sets of cells are alternately used to provide support for a person's body.

Such pressure pads or mattresses are already well known and as such will not be described here in great detail. Briefly though, a typical constructional form of such mattresses and pads is disclosed in British Patent Specification 1286197 and the description of this specification in this respect is incorporated herein by reference. This particular specification describes a mattress construction in which the two sets of cells comprise pluralities of interlaced cells of frusto-conical section, but it will be appreciated that the invention is equally applicable to air pads or mattresses whose cells are of a different size, shape or form, for example, of plain cylindrical form extending transversely of the pad or mattress with alternate cells pneumatically connected by means of header tubes running adjacent to a respective peripheral edge, each group of interconnected cells constituting a respective set. Alternatively, the cells may be in the form of linear arrays of serially interconnected, generally diamond-shape air bags or pockets. In this case the cells may again be arranged transversely of the pad or mattress, again with alternate ones being pneumatically connected together with the diamond shape air bags or pockets of adjacent linear arrays intermeshing with one another.

The pad or mattress may be formed using any convenient constructional technique. As an example, the two sets of cells may be formed separately as mouldings and held in the desired configuration either on a single flexible base sheet or sandwiched between two flexible sheets. The sets of cells may be of any convenient flexible, air-tight material, such as rubber coated canvas or plastics. As another example, the pad or mattress may be formed by two superimposed sheets of flexible plastic material welded together at selected regions such that the sheets define therebetween the two sets of cells.

In both cases, the pad or mattress also includes any suitable connection means for connecting pneumatic tubes to the respective sets of cells.

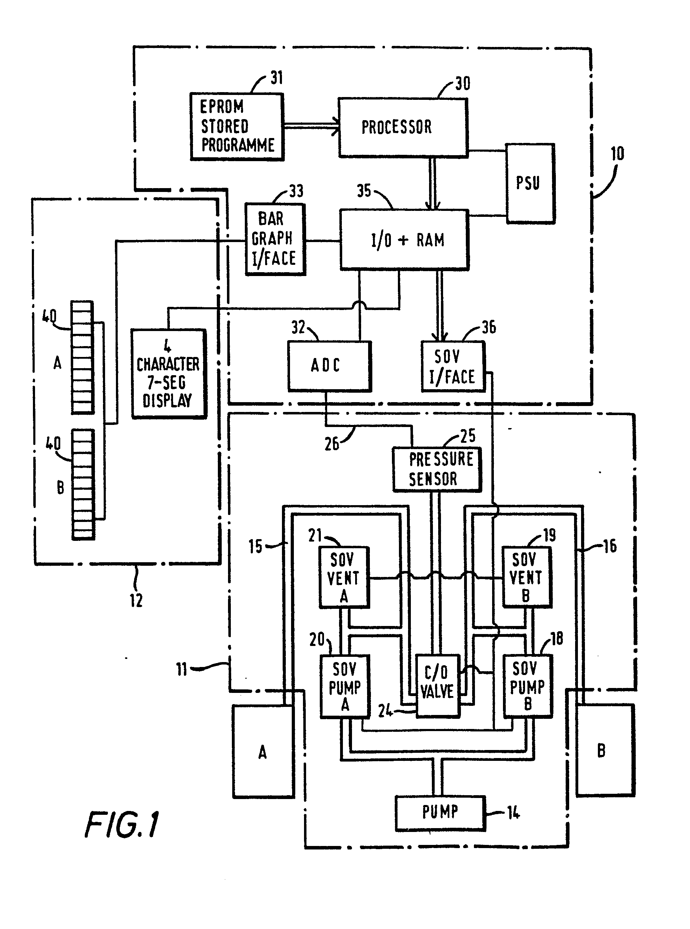

Referring now to the drawings, Figure 1 shows schematically the pneumatic and electronic circuits of the control system of the invention. The circuits may conveniently be divided into three sections, an electronic control section, referenced 10, a pneumatic control section, referenced 11, and a display section, referenced 12. The two sets of air cells of the pad or mattress are represented in the figure by the boxes A and B respectively.

The output of an electric motor driven air pump 14 in the pneumatic circuit 11 is connected to the cell sets A and B through respective pneumatic lines 15 and 16 in which a respective pair of series connected solenoid-operated valves 18, 19, and 20, 21 is disposed. The solenoid operated valves 18 to 21 are selectively energisable both to supply pressurised air delivered by the pump 14 to the cell sets A and B in order to inflate the cell sets and to vent the cell sets to atmosphere in order to deflate the cell sets. Thus, considering cell set A for example, solenoid valve 20 is energised to allow pressurised air delivered by pump 14 to pass therethrough and thence to line 15 and so to cell set A. The solenoid valve 21 being de-energised is closed, thereby preventing the venting of line 15. In order to deflate cell set A, solenoid valve 20 is de-energised, thus blocking the supply of pressurised air from pump 14, and solenoid valve 21 energised to vent line 15 to atmosphere, thereby causing cell set A to deflate by virtue of the cells inherent resilience and a person's body weight acting thereon.

The solenoid valves 18 and 19 associated with cell set B are operated in an identical and complimentary fashion in order to inflate and deflate cell set B. During normal operation of the control system, the two pairs of valves 18 and 19, and 20 and 21, are controlled in an inverse, or opposite, sense such that whilst valves 20 and 21 are operative to inflate cell set A, valves 18 and 19 function to deflate cell set B and vice-versa. It will be appreciated that with the solenoid valves being continuously cyclically operated to inflate and deflate sequentially the cell sets in this manner, the set of cells actually serving to support a person's body, and hence the areas of the body actually carrying the person's weight, are repeatedly changed. The frequency of this cyclical mode of operation, which can be varied as will be described, is selected in the case of an immobile hospital patient for example, using medical recommendations. Typically the transfer of the function of body support from one set of cells to the other may occur every several minutes.

The pump is arranged during normal use of the pad or mattress to be driven continuously and is so designed that no harm is caused even if both valves 18 and 20 are closed.

Also contained within the pneumatic section 11 is an electrically operable change over valve 24 which serves when repetitively energised and de-energised correspondingly to connect alternately the two pneumatic lines 15 and 16 to a piezo-electric pressure sensor 25 in order to sense separately air pressure within the two cell sets A and B. The change over valve 24 is connected via pneumatic lines and T-junctions to points in the lines 15 and 16 intermediate to valves 18 and 19 and 20 and 21 respectively and is operable by the electronic control section 10 to connect the pressure sensor 25 alternately with both sets of cells at a rate controlled by the control section 10.   In this way, the pressure sensor 25 is regularly switched between the two sets of cells to sense the pressure of air therein and provides an electrical signal to the electronic control section 10 along output line 26 which varies in accordance with those air pressures.  Although in operation cell sets A and B appear to be inflated or deflated in a continuous manner, actuation of the solenoid valves to achieve inflation or deflation is in fact carried out by the electronic unit 10 using pulsing techniques so that air pressure sensing by the sensor 25 may be accomplished at regular intervals determined by the pulsing rates.

The electronic control section 10 includes a central processing unit 30, viz. a microprocessor, together with customary associated circuits such as timing and power supply circuits.  Operation of the processing unit 30 is controlled by a program stored in an EPROM 31.   Information from the pressure sensor 25 is fed to the  unit 30, having first been converted to digital form by an analogue to digital convertor 32, via an input/output unit 35 which also contains a random access memory (RAM). The unit 30 provides control signals in dependence upon the requirements of both the program running and the sensed air pressure values of the sets of cells A and B to an interface unit 36 which suitably amplifies and conditions the signals for use by the solenoid valves 18 to 21 and change over valve 24.

Two ten segment LED bargraph displays 40 on a front panel of display section 12 are used to provide a visual indication of the pressure in both sets of cells. Each of the bargraph displays is controlled by the processing unit 30 via a digital shift register and an interface 33. By means of this circuit, a pulsed, serial digital data stream, generated by the processing unit 30, is converted to parallel data by three 8-bit serial to parallel shift registers. The parallel data, so generated, controls the on/off state of the individual elements of the bargraph displays 40, via the interface 33 which provides the necessary drive current for the LED elements. The LED drive current is limited by resistor arrays which are connected into the interface 33 - LED drive circuit.

A four character, seven segment digital LED display also housed in the front display panel alongside the bargraphs 40 is arranged to be driven by a multiplexed output of a display driver circuit within unit 35 to display simultaneously on respective pairs of the four characters the values of air pressure in cell sets A and B, as measured by the pressure sensor 25, in terms of, for example mm Hg.

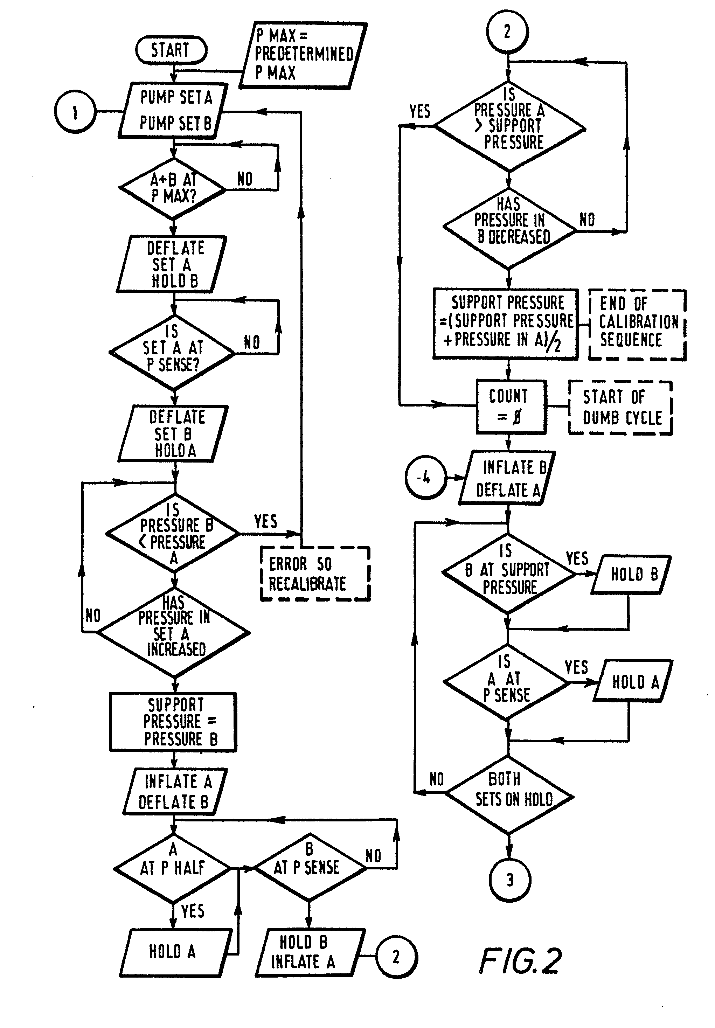

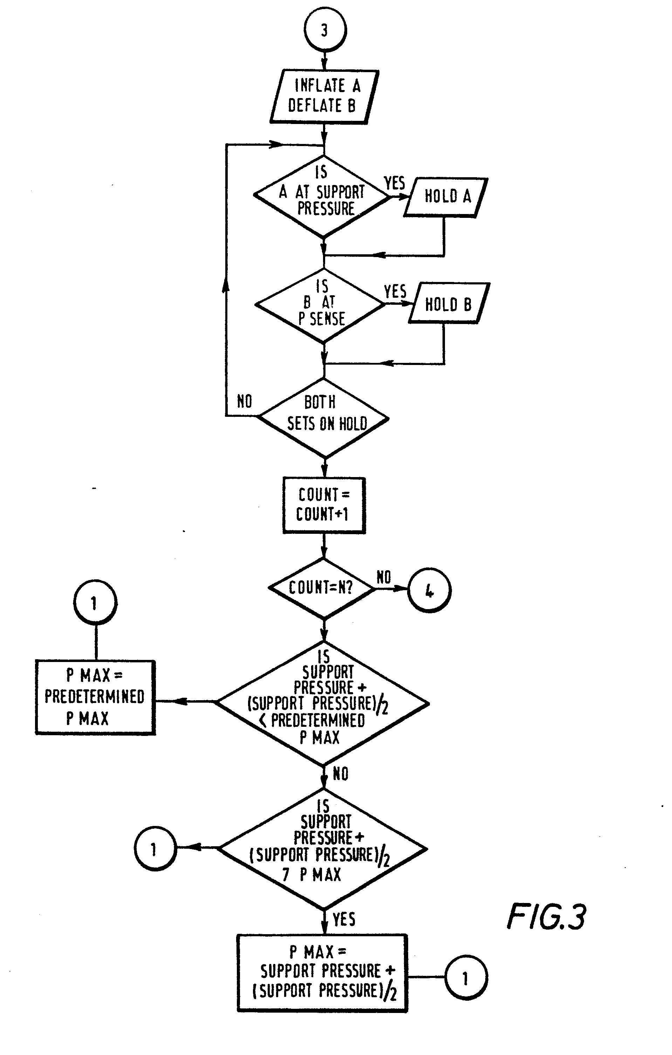

Operation of the control system will now be described with reference also to Figures 2 and 3 which are simplified flow charts illustrating the main stages of operation of the system. It will be assumed for the purpose of the following description that the pad or mattress is being supported on a firm bed or the like with a person sitting or lying on top.

Upon start-up, the central processing unit 30 implements, under the control of its associated program in EPROM 31, an initialisation (calibration) procedure. In accordance with the steps of this procedure, the unit 30 generates firstly control signals to operate the solenoids valves 18 and 20 such that both sets of cells A and B are supplied with pressurised air delivered by the pump 14, and hence inflated, simultaneously. Inflation of the cell sets A and B is continued until such time as the pressure of air within each set, as measured by sensor 25 in synchronism with pulsed operation of the valve 24, reaches a predetermined maximum value (Pmax) stored in the processor's memory. This predetermined maximum pressure is above normal operating pressure levels, i.e. more than sufficiently high to lift and support adequately any expected body weight. Pmax is the same for each set. Typically the value of Pmax will be around 60-70mm Hg. for a small seat pad and around 40 mm Hg

Upon achieving this predetermined pressure, valves 18 and 20 are de-energised to prevent further air being supplied to cell sets A and B and valve 21 energised so as to vent cell set A to atmosphere whilst cell set B is held at the predetermined pressure. The weight of the person's body acting, at this stage, on both sets of cells serves to expel air, and deflate, cell set A. During deflation of cell set A, cell set B may be "topped-up" with air if necessary. Naturally, it is expected that there will be some increase in air pressure in cell set B as cell set A continues to deflate and cell set B begins to provide a greater proportion of support to the person's body.

Cell set A is allowed to continue to deflate until a preselected "sensing pressure" level value (Psense), which is also stored in the memory of unit 35 of electronic control section 10, is reached. Typically Psense will be around 6-12mmHg. At this stage solenoid valve 21 is de-energised to hold cell set A at this sensing pressure level and valve 19 is energised so as to vent cell set B to atmosphere.

Whilst cell set B deflates, the pressure of air within cell set A is continually monitored by the unit 30 through the sensor 25. If at any point during this phase the measured pressure of set B is less than that of set A, the procedure is returned to the beginning. Eventually, with continued deflation of cell set B, a state will be reached where cell set A will again come under the influence of the person's body weight as support provided by cell set B is reduced. At the instant the air pressure in cell set A begins to increase, indicating that both cell set A and cell set B are supporting the person's body, the value of the air pressure in cell set B, determined by pressure sensor 25, is read by the unit 30 and stored in the memory of unit 35 as a "Preliminary Support Pressure" value. It will be appreciated that the point at which this happens is dependent upon the patient's body weight and posture and hence that the read Preliminary Support Pressure value in cell set B provides information indicative of body weight and posture for use by the processor unit 30.

The processing unit, 30 acting on instructions from the program in EPROM unit 31,then performs a first mathematical calculation using the read pressure value in its operation to derive a selected air pressure value to suit the individual's weight and posture requirements. More precisely, the unit calculates a "Half Inflation Pressure" (Phalf) which is given by Phalf = (Support Pressure - Psense)/2 + Psense. Thereafter, the unit 30 operates the solenoid valves 19 and 20, through input/output unit 35 and interface 36, to inflate cell set A whilst continuing to vent cell set B to atmosphere. When both the air in cell set B has reached the preset sensing pressure level Psense and the air in cell set A has increased to the aforementioned selected pressure level Phalf, the processor unit 30 reverses the solenoid valves so that cell set B is held at that pressure and cell set A is supplied with inflating air from the pump. The unit 30 continues to hold set B and inflate set A, simultaneously monitoring the pressure in both the sets of cells. When a decrease in the pressure of set B is first detected, indicating that set A begins to take over the support of the person, that is, the degree of support of the person's weight previously afforded by set B is effectively being transferred from set B to set A, the unit 30 performs a second calculation using the value of the pressure in set A at this point in order to derive a final, operating, "Support Pressure" value suited to the person's weight and posture requirements. This final Support Pressure is given by the expression Support Pressure (final) = (Preliminary Support Pressure + pressure of set A)/2. The derivation of this value marks the termination of the initialisation (calibration) routine. If the pressure of set A is found to have exceeded the Preliminary Support Pressure, then the unit 30 continues with the Support Pressure (final) = Preliminary Support Pressure.

Thereafter the unit 30 operates to control the supply of air to and from the sets A and B sequentially and alternately for a period of normal cyclical operation of the pad or mattress, (referred to as the "Dumb Cycle"). Thus cell set A is vented and cell set B inflated until the preset sensing pressure level Psense and Support Pressure level respectively are obtained and held, at which stage, or possibly after a certain time delay if desired, the processor unit again reverses operation of the valves 18 to 21 whereby cell set A is inflated to Support Pressure and cell set B deflated to Psense. This operation with the cell set A being deflated and then inflated and the cell set B being inflated and deflated to the aforementioned pressure values represents one cycle.

This cycle is then repeated by the unit 30 a number of times such that the cell sets A and B of the air pad or mattress are repeatedly, and alternately, inflated and deflated, whereby the portions of the pad or mattress providing support are continually changed. The function of the initialisation procedure of the system is such as to adjust automatically the operating air pressure of the cell sets A and B in accordance with an individual's body weight and posture, the selected pressure value being derived by the unit 30 in this respect also being selected with consideration to comfort so that the air pad or mattress provides adequately firm support for lifting and supporting a person's body whilst not being unduly hard. Being automatic, the operation of the system and especially the adjustment of air pressure does not require any manual input. Hence the system avoids the difficulties experienced with methods of operating air pads and mattresses known heretofore in which pressure values are required to be entered into the control system manually by an operator, for example a nurse, during setting up and in which therefore satisfactory operation is dependent on the abilities of the operator.

The frequency of each inflation/deflation cycle is governed by the time taken for a set of cells to be inflated from its low to its high pressine values, and therefore the capacity of the pump 14. The frequency may be reduced if desired, bearing in mind medical considerations, by introducing a suitable time delay, as referred to earlier, into the program controlling unit 30 such that when one set of cells achieves the preselected pressure value and the other set achieves the sensing pressure value, the unit 30 holds the sets at those pressure values for a chosen period before operating the valves to deflate and inflate respectively the cell sets.

Following a prescribed number N of cycles, for example, 3, during which the unit 30 serves to repetitively inflate and deflate the two set of cells A and B, the unit 30, under the control of the stored program, again implements the described initialisation procedure whereby a fresh selected air pressure value is derived and the unit 30 thereafter operates using this fresh selected pressure value. More especially, fresh selected pressure values are derived in this way at regular intervals during the operation of the pad or mattress between successive fresh implementation of the initialisation routine. By continually refreshing the selected pressure value in this manner, the system is able to adjust itself automatically to changes in body posture. It will be appreciated that if, for example, a person originally lying supine on the mattress was subsequently to sit up, their body weight would be redistributed and concentrated on a smaller area of the mattress with the result that the selected pressure level of the air cells derived whilst supine, may be insufficient to provide adequate support. The implementation of the fresh initialisation procedures at regular intervals ensures that such conditions are not allowed to exist for long before suitable adjustment to air pressure is effected. As shown in Figure 3, the value of Pmax used in the fresh initialisation routine is preferably increased to a value of Support Pressure + Support Pressure/2 provided that this value is greater than the initial Pmax. If it is less, then Pmax is set to the predetermined Pmax.

As mentioned previously, the control system may be used with so-called sequentially-operated pads or mattresses as, for example, described in U.K. Patent Specification No. 1499938.

CLAIMS

1.    A method of controlling operation of an air pad or mattress of the kind having at least one set of a plurality of air cells (A,B) which, in use, are selectively inflatable and deflatable so as to change from time to time the portions of the pad or mattress providing support to a body thereon, the one or more sets of cells being connected to a source of pressurised air (14) through valve means (18-21), and control means (10) inflate and deflate selectively the cells, characterised by the steps of sensing by pressure sensing means (25,24) connected with the control means (10) operational air pressure characteristics of the cells (A,B) and deriving information dependent upon a body's weight and disposition acting on the cells, selecting an operating air pressure value in accordance therewith, and thereafter controlling the valve means (18-21) so as to inflate selected cells (A,B) of the pad or mattress to around the selected operating air pressure value.

2.    A method according to Claim 1, characterised in that the air pad or mattress has a plurality of sets of air cells (A,B) and wherein the sets of cells are inflated alternately.

3.    A method according to Claim 1, characterised in that the air pad or mattress has one set of cells (A) and wherein the cells of said set are inflated sequentially.

4.    A method according to Claim 3, characterised in that the cells of said set (A) are individually inflated sequentially.

0168213 5.      A method according to Claim 3, characterised in that the cells of said set (A) are inflated sequentially in groups.

6.      A method according to Claim 1 or Claim 2, and wherein the air pad or mattress has two sets of cells (A,B), each selectively inflatable and deflatable, characterised in that the selected air pressure value is selected by the control means (10) by inflating the sets of cells (A,B) to a predetermined pressure value, venting one set of cells (A) until a preselected sensing pressure value is reached, venting the other set of cells (B) until the air pressure in the one set of cells (A) begins to rise as a result of body weight acting thereon, measuring the air pressure in the other set of cells (B) at this point, performing a first calculation within the control means using this measurement to derive a first pressure value, inflating the one set of cells (A) and deflating the other (B) until they reach said first pressure value and said sensing pressure value respectively, inflating the one set of cells (A) until the pressure in the other set of cells (B) begins to decrease, measuring the pressure in the one set of cells (A) at this point, performing a second calculation using this second, measured pressure value within the one set of cells (A) and the said first pressure value to derive the selected operating air pressure value.

7.      A method according to Claim 6, characterised in that, following derivation of the selected operating air pressure value, the control means (10) operates the valve means (18-21) so as to inflate and deflate alternately the sets of cells (A,B) to around the respectively selected operating air pressure value and a lower air pressure value.

8.    A method according to Claim 7, characterised in that the lower air pressure value comprises the preselected sensing pressure value.

9.    A method according to any one of the preceding claims, characterised in that the steps of deriving a selected operating air pressure value is repeated by the control means (10) after a period of time.

10.   A method according to Claim 9 together with Claim 7, characterised in that the steps of deriving a selected operating air pressure value is repeated after a predetermined number of inflation/deflation cycles of the sets of cells (A,B).

11.   A control system for an air pad of mattress of the kind having at least one set of air cells (A,B) which in use are selectively inflatable and deflatable so as to change from time to time the portions of the pad or mattress supporting a body thereon, comprising a pump (14) for delivering pressurised air, valve means (18-21), operable through control means (10) to control selectively the feeding of pressurised air from the pump to the cells and the exhausting of air therefrom in order to inflate and deflate respectively the cells, characterised in that the system includes pressure sensing means (25) connected with the control means (10) for sensing air pressures within the cells (A,B), and in that the control means (10) is arranged to sense operational air pressure characteristics of the cells (A,B) and derive information dependent upon a body's weight and disposition acting on the cells, and to select an operating air pressure value in accordance therewith, and thereafter to control the valve (18-21) means in order to inflate selected ones of the cells or sets of cells (A,B) to around the selected air pressure value.

12.  A control system according to Claim 12 and for use with an air pad or mattress having two sets of cells, characterised in that the pressure sensing means (25) is connected pneumatically to each of the sets of cells (A,B) to sense air pressure therein via a change over valve (24) operable by the control means (10).

13.  A control system according to Claim 12, characterised in that the control means (10) comprises a microprocessor (30) operable under the control of a stored program (31).

FIG.1

FIG.2

0168213

FIG.3